# EUROPÄISCHE PATENTSCHRIFT

(11) **EP 2 565 073 B1**
(45) Veröffentlichungstag und Bekanntmachung des Hinweises auf die Patenterteilung: **27.08.2014**
(21) Anmeldenummer: 12159606.8
(22) Anmeldetag: 15.03.2012
(51) Int. Cl.: B60N 2/24, B60N 2/42, B60N 2/427, F41H 7/04

(54) **Sicherheitssitz und Verfahren zur Reduzierung der Insassenbelastung eines Kraftfahrzeugs**
Safety seat and method for reducing the passenger load of a motor vehicle
Siège de sécurité et procédé de réduction de la charge d'occupants d'un véhicule automobile

(30) Priorität: 31.08.2011 DE 102011053156
(43) Veröffentlichungstag der Anmeldung: 06.03.2013
(73) Patentinhaber: Schroth Safety Products GmbH, 59757 Arnsberg (DE)
(72) Erfinder: Reinck, Wilko, 59505 Bad Sassendorf (DE)
(74) Vertreter: Griepenstroh, Jörg

(56) Entgegenhaltungen:
- WO-A1-96/31642
- DE-B3- 10 341 483

## Beschreibung

Die Erfindung betrifft ein Verfahren zur Reduzierung der Krafteinwirkung auf eine Person, die auf einem Sicherheitssitz eines Kraftfahrzeugs sitzt, gemäß den Merkmalen des Patentanspruchs 1.

Ferner betrifft die Erfindung einen Sicherheitssitz mit den Merkmalen des Patentanspruchs 4.

Es zählt zum Stand der Technik, Sicherheitssitze in gepanzerten Kraftfahrzeugen von dem Fahrzeugboden zu entkoppeln, damit die beispielsweise bei Überfahren einer Mine wirkenden Kräfte nicht unmittelbar über die Sitzstruktur auf einen Insassen des Kraftfahrzeugs übertragen werden. Das Überfahren einer Mine hat oftmals zur Folge, dass sich nicht nur das Fahrzeug als Ganzes vom Boden abhebt, sondern sich auch der Fahrzeugboden erheblich nach innen durchbiegt. Am Fahrzeugboden befestigte Sitze übertragen damit nicht nur die beim Fahrbetrieb entstehenden Stöße und Vibrationen auf die Fahrzeuginsassen, sondern auch die wesentlich größeren Beschleunigungskräfte im Fall einer Minenexplosion oder auch bei einem Unfall des Fahrzeugs.

Es ist bereits vorgeschlagen worden, Sicherheitssitze von der Fahrzeugstruktur zu entkoppeln, indem die Sitze über Zugmittel aufgehängt werden. Zugmittel haben die Eigenschaft, dass keine Druckkräfte übertragen werden können. Die bei einer Minenexplosion entstehende Schockwelle wird somit nicht auf den Sitz und damit auf den Insassen übertragen. Sitze, die über Zugmittel gehalten sind, benötigen jedoch mehr Fixierungspunkte, als Sitze mit starren Anbindungen.

Durch die US 2005/0264082 A1 zählt ein Sitz für ein gepanzertes Landfahrzeug zum Stand der Technik, der zum Schutz gegen Minen an einer oberen Aufhängung befestigt ist und welcher einen Sitzbezug sowie ein Rückhaltesystem aufweist. Die Aufhängung ist von einem Aufhängungsgestänge gebildet, dass vom Fahrzeugboden vollkommen entkoppelt ist. Ein U-förmiger Sitzrahmen ist gelenkig an dem Aufhängungsgestänge gelagert und über elastische Aufhängegurte des Sitzbezuges mit oberen Aufhängungspunkten verbunden. Die elastischen Aufhängegurte besitzen eine energieverzehrende Sollbruchstelle. Diese leichtbauende Anordnung ist zwar zur Entkoppelung des Sitzes vom Fahrzeugboden geeignet, allerdings kann sich bei einem Absenken der Sitzfläche die Situation einstellen, dass die angegurtete Person unter dem vorgesehenen Hüftgurt hindurch rutscht (Submarining). Dies ist insbesondere dann ein Problem, wenn die energieaufzehrenden Sollbruchstellen nicht wegen einer Minenexplosion, sondern wegen eines Verkehrsunfalls des Fahrzeugs reißen, wobei sich je nach Sitzanordnung der Submarining-Effekt sehr negativ auswirken kann.

Die WO 02/26524 A1 offenbart einen Sicherheitssitz mit einem Dämpfungsmechanismus, der im Bereich der Rückenlehne des Sitzes angeordnet ist. Die Sitzstruktur umfasst eine Sitzflächeneinheit und eine Rückeneinheit. Die Rückeneinheit weist einen oberen, mit der Struktur des Kraftfahrzeugs verbundenen Teil auf und einen unteren Teil, der gegenüber dem oberen Teil absenkbar ist und mit der Sitzflächeneinheit verbunden ist. Der energieverzehrende Dämpfer ist zwischen dem unteren und dem feststehenden oberen Teil angeordnet und besteht aus einem Biegemechanismus. Bei der Verlagerung des unteren Teils gegenüber dem oberen Teil der Rückeneinheit wird ein Metallband durch die Biegeeinheit verbogen. Durch die Verformungsarbeit wird die Energie, die beispielsweise beim Überfahren einer Mine auf den Fahrzeuginsassen wirkt, zumindest teilweise umgewandelt. Der untere Teil des Sitzes senkt sich insgesamt ab. Die Belastungen auf den Insassen werden reduziert, allerdings ist der energieverzehrende Dämpfer vergleichsweise aufwendig.

Aus der US 3 885 810 A ist eine Sitzstruktur für sich schnell bewegende Fahrzeuge bekannt. Die Sitzstruktur soll selbst stärksten Kollisionen standhalten. Die Sitzstruktur ist jedoch mit dem Fahrzeugboden gekoppelt, so dass bei einer Minenexplosion entstehende Schockwellen auf den Sitz übertragen werden können. Eine solche Sitzstruktur eignet sich daher primär zur Aufnahme von Kräften, die in Fahrtrichtung und nicht in Hochrichtung des Fahrzeugsitzes wirken.

Durch die US 2010/0270836 A1 zählt eine Sitzstruktur mit einem Energieabsorber zum Stand der Technik, wobei die Energie sowohl beim Anheben des Sitzes als auch beim Absenken des Sitzes abgebaut wird. Bei einer Minenexplosion hebt sich das gesamte Fahrzeug und damit die Sitzstruktur insgesamt an. Während des Anhebens wird das hintere Ende der Sitzstruktur unter der Last des Insassen abgesenkt und dadurch die auf den Insassen wirkende Kraft reduziert. Bei der Abwärtsbewegung (slam down) hebt sich der hintere Bereich der Sitzfläche zunächst wieder an. Die Anordnung zur Energieabsorption wird währenddessen zurückgesetzt, so dass bei einem Aufprall des Fahrzeugs erneut die Sitzfläche unter der Last des Insassen abgesenkt werden kann, um die auf den Insassen wirkenden Kräfte zu reduzieren. Dieses Prinzip basiert darauf, dass ein Draht umgeformt wird und das freie Ende des Drahtes durch einen Greifer gefasst wird, welcher den Draht erneut spannt, bevor der Draht einer neuen Belastung ausgesetzt wird. Diese Bauform eines Fahrzeugsitzes ist jedoch nicht vom Boden entkoppelt.

Die DE 103 41 483 B3 offenbart einen in einem Land-, Luft- oder Seefahrzeug hängend angeordneten Sicherheitssitz. Dieser Sicherheitssitz dient zur Reduzierung der Krafteinwirkung auf eine Person, die auf einem solchen Sicherheitssitz sitzt. Wenigstens eine Sitzflächeneinheit des Sicherheitssitzes wird zumindest teilweise über wenigstens ein Haltegurtband gehalten. Das wenigstens eine Haltegurtband wird von einer Aufwickeleinheit gehalten, wobei die Aufwickeleinheit eine wirksame Länge des Haltegurtbandes verkürzt und so eine Vorspannkraft auf das Haltegurtband aufbaut, so dass die noch wirksame Länge des Haltegurtbandes wieder bereitsteht, um durch eine weitere Krafteinwirkung gelängt zu werdend. Diese Sitzanordnung sieht verschiedene Schaltzustände für die Aufwickeleinheit bzw. Gurtaufroller vor. Ein erster Schaltzustand ermöglicht einen Freilauf der Gurtaufroller, bei welchem die Haltegurte aus dem ungeordneten Gurtaufroller ausgezogen werden können und sich selbsttätig wieder aufwickeln. Dadurch kann sich der mit dem Gurtzeug an die Gurtaufroller angeschlossene Insasse zwischen den Fixpunkten der Gurte frei bewegen. Ein zweiter Schaltzustand führt eine vollständige Sperrung der Gurtaufroller gegen Gurtbandauszug und Gurtbandeinzug herbei. In diesem Schaltzustand sind die Haltegurte straff, jedoch unnachgiebig fixiert. Ein dritter Schaltzustand ermöglicht ausschließlich einen Gurtbandeinzug, während der Gurtbandauszug gesperrt ist. In diesem Schaltzustand ist eine Rücklaufsperre verwirklicht, im Rahmen derer durch Bewegungen des Fahrzeuginsassen freigegebene Gurtlänge der Haltegurte eingezogen wird. Es wird als nachteilig angesehen, dass ein solcher Sicherheitssitz seine Sicherheitswirkung unter Umständen nur in Abhängigkeit von dem Schaltzustand erfüllt. Wünschenswert wäre es, wenn eine Entkopplung von dem Boden des Kraftfahrzeugs möglich ist, ohne dass der Schaltzustand des Gurtaufrollers zu einer Gefährdung des Insassen führt.

Zum Stand der Technik ist ferner die WO 96/31642 A1 zu nennen. Es wird ein gewebtes Gurtband für ein Fahrzeuginsassenrückhaltesystem offenbart. Eine Kraftbegrenzung kann durch eine Dehnungsvorrichtung nach Art einer am Gurtband ausgebildeten Gurtschlaufe ausgestaltet werdend, wobei die Gurtschlaufe beim Überschreiten einer vorgegebenen Zugbelastung eine zusätzliche Gurtlänge freigibt, die wiederum zum Aufrollen mit einer Aufrollvorrichtung zur Verfügung steht. Auch können Kettfäden des Gurtbandes mit verschiedenen Längen ausgebildet sein, um eine Gurtlängung zu ermöglichen.

Der Erfindung liegt die Aufgabe zugrunde, einen leichtbauenden Sicherheitssitz aufzuzeigen, insbesondere für den Einsatz in Fahrzeugen, die hohen, stoßartigen Belastungen in vertikaler Richtung ausgesetzt sind, wie beispielsweise Luftfahrzeug, insbesondere Helikopter während der Landung oder eines Absturzes, oder auch gepanzerte Fahrzeuge, die einer Gefährdung durch Landminen ausgesetzt sind, wobei der Sicherheitssitz geeignet ist, sowohl in Vertikalrichtung wirkende g-Kräfte in erheblichem Umfang aufzunehmen und die Einwirkung auf den Insassen zu reduzieren, aber auch gleichzeitig eine sichere Fixierung des Insassen unter Entkoppelung von dem Boden des Kraftfahrzeugs ermöglicht, ohne dass sich der nachteilige Submarining-Effekt einstellt. Zudem soll ein Verfahren zur Reduzierung der Krafteinwirkung auf eine Person, die auf einem Sicherheitssitz eines Kraftfahrzeugs sitzt, aufgezeigt werden.

Diese Aufgabe ist bei einem Verfahren mit den Merkmalen des Patentanspruchs 1 gelöst.

Ein entsprechender Sicherheitssitz ist Gegenstand des Patentanspruchs 4.

Vorteilhafte Weiterbildungen der Erfindung sind Gegenstand der Unteransprüche,

Das erfindungsgemäße Verfahren dient zur Reduzierung der Krafteinwirkung auf eine Person, die auf einem Sicherheitssitz eines Kraftfahrzeuges sitzt. Das Verfahren umfasst folgende Merkmale:
a) Wenigstens eine Sitzflächeneinheit des Sicherheitssitzes wird zumindest teilweise über wenigstens ein Haltegurtband gehalten;
b) Das wenigstens eine Haltegurtband ist zwischen einer Rückeneinheit des Sicherheitssitzes und der Sitzflächeneinheit wirksam;
c) Das wenigstens eine Haltegurtband weist mindestens einen sich unter der Last eines Unfalls oder einer Explosion längenden Verlängerungsabschnitt auf;
d) Das wenigstens eine Haltegurtband wird von einer Aufwickeleinheit gehalten, wobei die Aufwickeleinheit eine wirksame Länge des Haltegurtbands verkürzt und ein Vorspannkraft auf das Haltegurtband aufbaut hält, nachdem das Haltegurtband unter der Last einer aus einem Unfall oder einer Explosion resultierenden Kraft im Bereich seines Verlängerungsabschnitts gelängt worden ist, so dass die noch wirksame Länge des Haltegurtbands wieder bereit steht, um durch eine weitere Krafteinwirkung gelängt zu werden.

Anders als im Stand der Technik wird als energieabsorbierendes Element kein Draht eingesetzt, sondern ein Haltegurtband aus einem textilen Material. Das Haltegurtband weist einen Verlängerungsabschnitt auf, der dafür vorgesehen ist, unter extremen Belastungen, wie sie bei einem Unfall oder einer Explosion auftreten, eine Längung des Haltegurtbandes zu ermöglichen. Hierzu besitzt der Verlängerungsabschnitt beispielsweise wenigstens zwei aufeinander liegende Schlaufen, die über wenigstens eine Sollbruchstelle miteinander verbunden sind.

Ein wesentliches Merkmal der Erfindung ist eine Aufwickeleinheit, um das Haltegurtband wieder aufzuwickeln, falls das Gurtband durch Freigabe einer Schlaufe an einer Sollbruchstelle verlängert worden ist. Die Aufwickeleinheit baut mithin eine Vorspannkraft auf, sodass das Haltegurtband bei einer Entlastung sofort eingezogen werden kann und durch die Vorspannkraft, die z. B. aus einer Federkraft resultiert, gestrafft ist. Das von dem Haltegurtband gehaltene Bauteil des Sicherheitssitzes, d. h. wenigstens die Sitzflächeneinheit oder auch der gesamte Sicherheitssitz, der durch das Haltegurtband gegenüber dem Fahrzeug gehalten ist, steht unmittelbar für eine weitere Belastung zur Verfügung, insbesondere für den sogenannten slam down, bei welchem ein durch eine Minenexplosion angehobenes Fahrzeug wieder herunterfällt, wobei auf die Insassen erneut hohe Kräfte einwirken.

Die Vorteile des erfindungsgemäßen Verfahrens kommen insbesondere dann zum Tragen, wenn die aus einem Unfall oder einer Explosion resultierende Kraft im Wesentlichen senkrecht nach oben wirkt, so dass der gesamte Sicherheitssitz bis zu einem oberen Totpunkt angehoben wird, wobei die Aufwickeleinheit bei Erreichen des oberen Totpunktes bzw. ab dem Zeitpunkt, ab dem das Haltegurtband entlastet wird, das Haltegurtband verkürzt, bevor der Sicherheitssitz sich wieder nach unten bewegt. Selbstverständlich kann das Aufwickeln des Haltegurtbandes auch auf dem Weg vom oberen Totpunkt zum unteren Totpunkt erfolgen. Maßgeblich ist hierbei, dass bei einer weiteren Krafteinwirkung auf den Insassen die Möglichkeit geschaffen wird, erneut Energie im Bereich des Haltegurtbandes abzubauen.

Der Verlängerungsabschnitt des Haltegurtbandes besitzt hierzu vorzugsweise mehrere Sollbruchstellen, wobei die Sollbruchstellen Reißnähte oder Klebeverbindungen sind, dies bei Überlastung reißen bzw. zerstört werden und eine Schlaufe des Haltegurtbandes freigeben. Das Grundprinzip einer solchen Sollbruchstelle ist, dass das Haltegurtband bei standardgemäßer Belastung, d. h. im normalen Fahrbetriebs nicht gelängt wird, sondern erst bei Überschreiten eines bestimmten Lastniveaus. Wird dieses Lastniveau erreicht, werden die aufeinanderliegenden Schlaufen bzw. Gurtlagen durch Zerstören der Reißnähte oder der Klebeverbindungen voneinander getrennt. Das Lastniveaus ist hierbei insbesondere fallend ausgebildet, da sich dadurch eine günstige Kraftentfaltung bzw. Kraftaufnahme im Hinblick auf die zu schützende Person ergibt.

Das energieverzehrende Element, d. h. das Haltegurtband ist nur zwischen einer Rückeneinheit des Sicherheitssitzes und der Sitzftächeneinheit anzuordnen, so dass es auch nur hier wirksam ist.

Ein Vorteil der Erfindung ist, dass das energieabsorbierende Element, insbesondere in Form einer Sollbruchstelle eines textilen Haltegurtbandes unabhängig von seiner Anordnung sehr leicht ist, wenig Bauraum benötigt und ist hinsichtlich der Energieabsorption äußerst effektiv ist. Zudem sind Haltegurtbänder relativ kostengünstig und leicht zu handhaben. Die Montage und Demontage ist technisch leicht und schnell zu realisieren.Der erfindungsgemäße Sicherheitssitz zeichnet sich durch folgende Merkmale aus:
a) Der Sicherheitssitz umfasst eine Sitzflächeneinheit und eine Rückeneinheit;
b) Die Rückeneinheit weist einen oberen Teil und einen unteren Teil auf, wobei der Sicherheitssitz über den oberen Teil mit der Struktur eines Kraftfahrzeugs verbindbar ist und wobei der untere Teil gegenüber dem oberen Teil absenkbar ist und an dem oberen Teil geführt und über wenigstens ein Haltegurtband mit dem oberen Teil verbunden ist;
c) Die Sitzflächeneinheit ist mindestens teilweise über das wenigstens eine Haltegurtband gehalten;
d) Das wenigstens eine Haltegurtband weist mindestens einen sich unter der Last eines Unfalls oder einer Explosion längenden Verlängerungsabschnitt;
e) Das wenigstens eine Haltegurtband ist von einer Aufwickeleinheit gehalten;
f) Die Aufinrickeleinheit ist dafür vorgesehen, eine wirksame Länge des wenigstens einen Haltegurtbands zu verkürzen und unter einer Vorspannkraft zu halten, wenn sich das Haltegurtband unter der Last einer aus einem Unfall oder einer Explosion resultierenden Kraft längt, so dass ein weiterer Verlängerungsabschnitt innerhalb der wirksamen Länge des Haltegurtbands bereit steht und durch eine weitere Kraft längbar ist.

Dieser Sicherheitssitz besitzt die Vorzüge, wie sie bei dem vorstehend geschilderten Verfahren zum Tragen kommen. Der erfindungsgemäße Sicherheitssitz besitzt eine Rückeneinheit mit einem oberen Teil und einem unteren Teil, wobei der Sicherheitssitz über den oberen Teil mit der Struktur eines Kraftfahrzeugs verbindbar ist und wobei der untere Teil gegenüber dem oberen Teil absenkbar ist. Bei der Struktur eines Kraftfahrzeugs, an dem der Sicherheitssitz befestigt ist, kann es sich insbesondere um einen Wandabschnitt eines Kraftfahrzeugs handeln. Theoretisch ist es auch möglich, die Rückeneinheit an der Decke des Fahrgastraumes zu befestigen. Maßgeblich ist lediglich, dass der untere Teil der Rückeneinheit gegenüber dem oberen Teil absenkbar ist und dass der Sicherheitssitz vom Boden des Kraftfahrzeugs entkoppelt ist.

Der untere Teil ist an dem oberen Teil geführt. Er wird bevorzugt über die energieabsorbierenden Haltegurtbänder mit dem oberen Teil verbunden.

Zusätzlich ist die Sitzflächeneinheit über ihren vorderen Teil gelenkig mit dem oberen Teil der Rückeneinheit verbunden. Der untere Teil der Rückeneinheit ist gleichzeitig mit einem hinteren Teil der Sitzflächeneinheit verbunden. Die Anbindung erfolgt derart, dass sich der hintere Teil der Sitzflächeneinheit insbesondere bei in Vertikalrichtung .wirkenden g-Kräften weiter absenkt als der vordere Teil der Sitzflächeneinheit, wenn auf das Kraftfahrzeug eine aus einem Unfall oder einer Explosion resultierende Kraft einwirkt.

Ein Vorteil der erfindungsgemäßen Sitzflächeneinheit ist neben der Entkoppelung vom Fahrzeugboden, dass ein Submarining vermieden wird, da sich lediglich der hintere Teil der Sitzflächeneinheit, nicht jedoch der vordere Teil der Sitzflächeneinheit absenkt. Die auf dem Sitz sitzende Person winkelt dadurch zwangsläufig in der sitzenden Position die Oberschenkel stärker gegenüber dem Oberkörper ab, so dass sich ein Beckengurt, der insbesondere mit dem hinteren Teil der Sitzflächeneinheit verbunden ist, eng an die Person anschmiegt. Ein Submarining wird unterbunden.

Der erfindungsgemäße Sicherheitssitz umfasst bevorzugt eine Gurtabspannung, welche den vorderen Teil der Sitzflächeneinheit mit dem oberen Teil der Rückeneinheit verbindet. Damit sich ein Anti-Submarining-Effekt einstellt, ist der Drehpunkt, an welchem die Gurtabspannung mit der Sitzflächeneinheit verbunden ist, im größeren horizontalen Abstand von der Rückeneinheit angeordnet, als der Schwerpunkt einer auf dem Sicherheitssitz sitzenden Person. Der gewünschte Anti-Submarining-Effekt ergibt sich unter der Annahme, dass die angreifenden g-Kräfte im Wesentlichen in vertikale Richtung wirken.

Der Drehpunkt für die seitlichen Gurtabspanner befindet sich vorzugsweise in einem gewissen Abstand von der Vorderkante des vorderen Teils der Sitzflächeneinheit, so dass bei einem Absenken des hinteren Teils der vordere Teil der Sitzflächeneinheit gleichzeitig angehoben wird. Das verstärkt noch den Anti-Submarining-Effekt des erfindungsgemäßen Sicherheitssitzes.

Vorzugsweise umfasst der erfindungsgemäße Sicherheitssitz ferner eine Sicherheitsgurtanordnung mit Schultergurten, wobei die Schultergurte am oberen Teil der Rückeneinheit umgelenkt werden und durch Absenken des unteren Teils der Rückeneinheit spannbar sind. Insbesondere sind die Schultergurte an dem unteren Teil der Rückeneinheit befestigt. Durch das Spannen der Schultergurte wird der Oberkörper fest in Richtung der Rückeneinheit gezogen. Das Spannen der Schultergurte ergibt sich ausschließlich durch das Absenken des unteren Teils der Rückeneinheit. Hierzu können entweder die umgelenkten Endabschnitte der Schultergurte mit dem unteren Teil der Rückeneinheit verbunden sein, um die Schultergurte im Bereich der Schulterpartie nach hinten zu ziehen. Alternativ ist es auch denkbar, den oberen Bereich der Schultergurte an dem oberen Teil der Rückeneinheit zu fixieren, während die unteren Enden des Schultergurtes mit dem unteren Teil der Rückeneinheit verbunden sind, um auf diese Weise beim Absenken des hinteren Teils des Sitzes bzw. des unteren Teils der Rückeneinheit gespannt zu werden.

Selbstverständlich ist es möglich, auch beide Enden der Schultergurte, d. h. sowohl die jeweils untere Partie als auch die jeweils obere Partie über die Umlenkung am oberen Teil der Rückeneinheit mit dem unteren Teil der Rückeneinheit zu verbinden.

Die Rückeneinheit selbst bildet nicht zwangsläufig die Rückenlehne, an welcher sich der Oberkörper der Person abstützt. Vielmehr kann eine Rückenlehneneinheit aus einem textilen Gewebe zwischen den Gurtabspannungen, weiche den vorderen Teil des Sitzes halten, angeordnet sein und von dieser gehalten sein. Die Gurtabspannungen sind durch das Eigengewicht der Person auf dem Sitz straff gespannt, so dass auch die Rückenlehneneinheit in Form bleibt.

Die Rückenlehneneinheit kann so konfiguriert sein, dass sie sich im Abstand von der Rückeneinheit mit den Haltegurtbändern befindet, so dass die Haltegurtbänder nicht durch die Rückenlehneneinheit beeinträchtigt werden. Denkbar ist natürlich auch, dass die Haltegurtbänder die Rückenlehneneinheit noch unterstützen.

Die Aufwickeleinheit bei einer Integration in den Sicherheitssitz kann vorzugsweise am unteren Ende der Haltegurtbänder angeordnet sein. Das heißt, sie senkt sich mit dem hinteren Ende der Sitzflächeneinheit unter Last ab und hebt sich auch wieder zusammen mit der Sitzflächeneinheit bei einer Entlastung. Dadurch wird die Sitzflächeneinheit nach oben gezogen.

Für eine vollständige Entkoppelung der Personen von dem Fahrzeugboden ist vorgesehen, dass mit dem unteren Teil der Rückeneinheit eine Fußstütze verbunden ist, die sich ohne den Boden des Kraftfahrzeugs zu berühren, unterhalb, im Abstand zur und in Richtung der Sitzflächeneinheit erstreckt. Der Abstand ist so groß gewählt, dass die Person bequem ihre Füße abstellen kann. Die Fußstützeneinheit kann teleskopierbar sein, wobei sie bei Nichtgebrauch eingeschoben werden kann und nicht störend über den vorderen Teil der Sitzflächeneinheit vorsteht. Die Fußstütze senkt sich aufgrund ihrer Verbindung mit dem unteren Teil der Rückeneinheit gleichzeitig mit der Sitzflächeneinheit ab, wobei jedoch auch die Fußstütze noch nicht mit dem Boden des Kraftfahrzeugs in Kontakt kommt. Die Person bleibt also auch dann von dem Boden des Kraftfahrzeugs entkoppelt, wenn sich die Sitzeinheit abgesenkt hat.

Bevorzugt weist das Haltegurtband Mittel zur Anzeige einer Überlastung auf. Hierbei kann es sich beispielsweise um eine farbliche Markierung handeln, die sich in den überlappenden Schlaufen des Verlängerungsabschnitts befindet und erst dann sichtbar wird, wenn sich die Sollbruchstelle öffnet. Das ist ein eindeutiges Zeichen dafür, dass das Haltegurtband auszuwechseln ist. Ein solches Anzeigemittel benötigt keinen zusätzlichen Platz außerhalb des Haltegurtbandes, ist leicht und zudem geschützt angeordnet.

Vorzugsweise sind im Rahmen der Erfindung zwei Arten von Haltegurtbändern vorgesehen. Das wenigstens eine erste Haltegurtband ist wie vorstehend beschrieben mit der Aufwickeleinheit versehen. Darüber hinaus kann wenigstens ein zweites Haltegurtband vorgesehen sein, das ohne eine solche Aufwickeleinheit befestigt ist. Die Funktion des zweiten Haltegurtbands besteht darin, das erste Haltegurtband und damit die Aufwickeleinheit im normalen Betrieb zu entlasten. Dadurch, dass zwei verschiedene Haltegurtbänder vorgesehen sind, können diese auch mit Sollbruchstellen unterschiedlicher Lastniveaus ausgestattet sein. Denkbar ist beispielsweise, dass das Haltegurtband ohne Aufrolleinrichtung, das bei der ersten Ansprengung bzw. Belastung reißen muss, ausschließlich auf diese erste Belastung ausgelegt ist, während das zweite Haltegurtband, dass mit der Aufwickeleinheit verbunden ist, ausschließlich für die zweite Belastung bei einem slam down ausgelegt ist. Denkbar ist aber auch, dass das jenige Haltegurtband ohne Aufwickeleinheit eine fixierende Funktion hat und schon bei relativ geringer Belastung reißt, während das Haltegurtband mit Aufwickeleinheit zwei Sollbruchstellen für unterschiedliche Lastniveaus besitzt und damit primär die Kräfte aus Ansprengung oder einem Unfall aufnimmt.

Die Erfindung wird nachfolgend anhand von in den Zeichnungen dargestellten Ausführungsbeispielen näher erläutert. Es zeigt:
- Figur 1: eine rückwärtige Ansicht eines Sicherheitssitzes in einer ersten Ausführungsform;
- Figur 2: den Sicherheitssitz der Figur 1 in rückwärtiger Ansicht, wobei der untere Teil der Rückeneinheit abgesenkt ist;
- Figur 3: eine weitere Ausführungsform eines Sicherheitssitzes in rückwärtiger Ansicht und

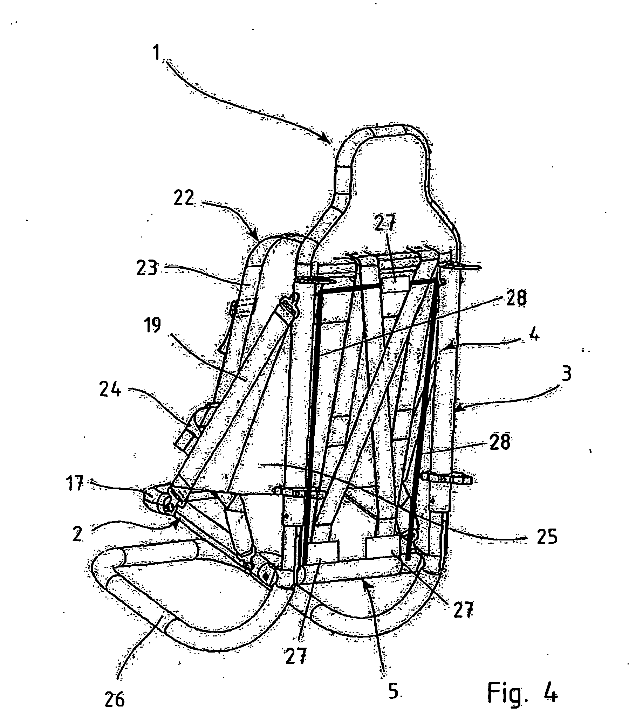

- Figur 4: eine weitere Ausführungsform eines Sicherheitssitzes mit Fußstütze in einer Ansicht von schräg hinten.

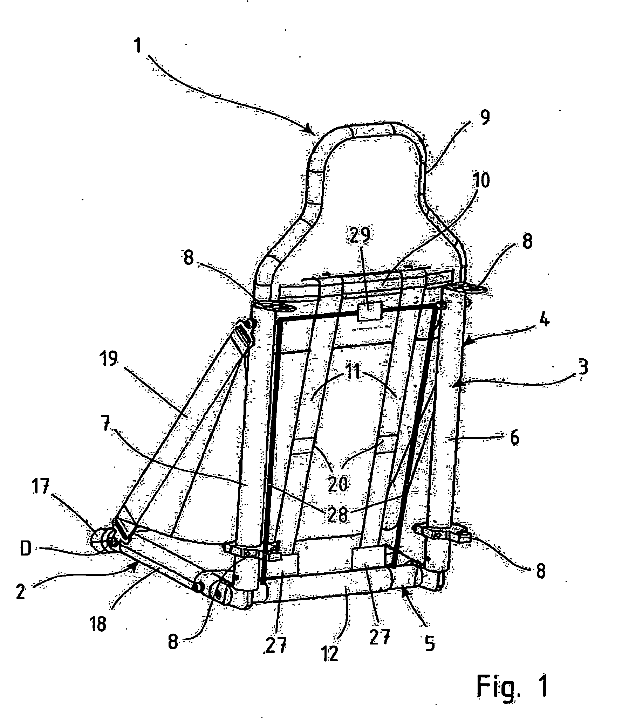

Figur 1 zeigt einen Sicherheitssitz 1. Dieser Sicherheitssitz 1 kann in ein nicht näher dargestelltes Kraftfahrzeug eingebaut werden. Hierbei kann es sich insbesondere um ein gepanzertes Landfahrzeug handeln. Auch der Einbau in ein Luft- oder Seefahrzeug ist denkbar.

Der Sicherheitssitz 1 umfasst als wesentliche Komponenten eine Sitzflächeneinheit 2 und eine Rückeneinheit 3. Die Rückeneinheit 3 besteht wiederum aus einem oberen Teil 4 und aus einem gegenüber dem oberen Teil 4 nach unten verlagerbaren unteren Teil 5. Lediglich der obere Teil 4 der Rückeneinheit 3 ist dafür vorgesehen, mit der Struktur des Kraftfahrzeugs verbunden zu werden. Hierzu sind an dem rahmenartig gestalteten oberen Teil 4 zwei im Abstand zueinander verlaufende Führungsrohre 6, 7 vorgesehen. Jeweils am oberen Ende der Führungsrohre 6, 7 und im Bereich der unteren Enden der Führungsrohre 6, 7 sind Befestigungsmittel angeordnet, über welche die Führungsrohre 6, 7 fest mit der Struktur des Kraftfahrzeugs verbunden werden.

Die unteren Befestigungsmittel 8 sind Schellen, welche die Führungsrohre 6, 7 klemmend umgreifen. Diese Befestigungsmittel 8 können aufgrund ihrer klemmenden Befestigung leicht höher oder tiefer an den Führungsrohren 6, 7 befestigt werden, so dass der Abstand zwischen den oberen und den unteren Befestigungspunkten 8 veränderlich ist. Es erleichtert die Anpassung der Anbindung des Sicherheitssitzes 1 in unterschiedliche Einbausituationen und Karosseriestrukturen.

Die Führungsrohre 6, 7 sind insbesondere senkrecht angeordnet. Bei diesem Ausführungsbeispiel können die Führungsrohre auch leicht geneigt sein, d. h. in einem Winkel von 5° bis 20° zur Vertikalen montiert sein, so dass sich eine leichte Neigung der Rückeneinheit 3 einstellt.

Am oberen Ende der Rückeneinheit 3 befindet sich eine Kopfstütze 9. Die Kopfstütze besteht aus einem sich nach oben hin in der Breite verjüngenden Rahmenbauteil, dass sich oben an die beiden Führungsrohre 6, 7 anschließt. Dieses Rahmenbauteil wird von einer textilen Bespannung überdeckt. Am unteren Ende der Kopfstütze 9 zwischen den beiden Führungsrohren 6, 7 befindet sich ein Querholm 10, an welchem zwei im parallelen Abstand zueinander verlaufende Haltegurtbänder 11 befestigt sind. Die Haltegurtbänder 11 erstrecken sich von dem Querholm 10 nach unten zu einem unteren Querholm 12, weicher Bestandteil des unteren Teils 5 der Rückeneinheit 3 ist. Zwischen dem Querholm 10 und den Haltegurtbändern 11 befinden sich Aufrolleinrichtungen 27, die sich immer in gesperrter Position befinden.

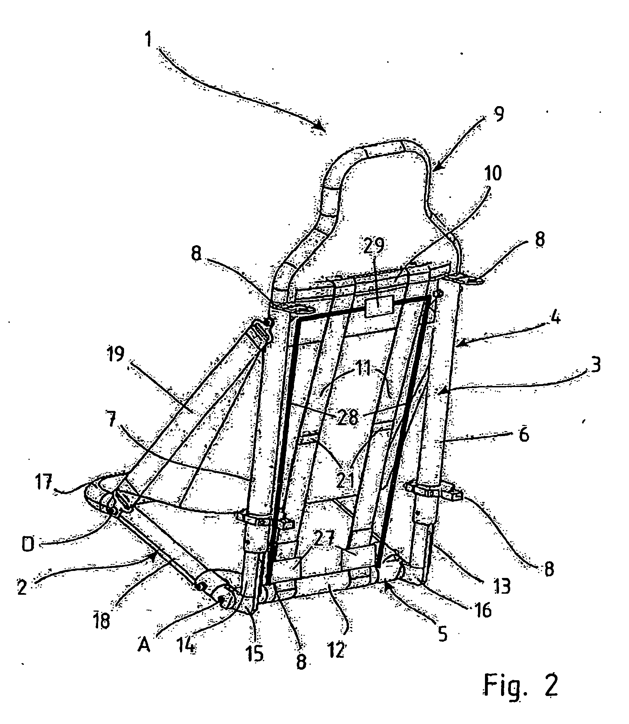

Der untere Teil 5 ist gegenüber dem oberen Teil 4 der Rückeneinheit 3 translatorisch verlagerbar, wie anhand Figur 2 zu erkennen ist. Der untere Teil 5 besitzt Tauchprofile 13, 14, welche in die jeweils zugehörigen Führungsrohre 6, 7 eintauchen und von diesen geführt werden. Die Tauchprofile 13, 14 sind ausschließlich translatorisch verlagerbar. Die Tauchprofile 13, 14 sind fest mit dem unteren Querholm 12 verbunden. Knotenelemente 15, 16 verbinden das jeweilige Tauchprofil 13, 14 mit dem unteren Querholm 12.

Die Knotenelemente 15, 16 besitzen zudem eine Anbindung für die Sitzflächeneinheit 2. Hierbei liegt die Schwenkachse A bzw. der jeweilige Gelenkpunkt zwischen den Knotenelementen 15, 16 und der Sitzflächeneinheit 2 auf der dem unteren Querholm 12 abgewandten Seite der Tauchprofile 13, 14. Mit anderen Worten befindet sich der untere Querholm 12 zwischen der Schwenkachse A der Sitzflächeneinheit 2 und den Tauchprofilen 13, 14, die bei dieser Ausgestaltung der Erfindung nach oben von den Knotenelementen 15, 16 abgehen. Die Knotenelemente 15, 16 sind dadurch gewissermaßen L-förmig konfiguriert. Der untere Querholm 12 ist gegenüber dem oberen Querholm 10 dadurch auch in Richtung zur Sitzflächeneinheit 2 verlagert, so dass die Haltegurtbänder 12 in einem Winkel zu der von den geraden Führungsrohren 6, 7 aufgespannten Ebene verlaufen.

Die Sitzflächeneinheit 2 besitzt einen vorderen Teil 17 und einen hinteren Teil 18. Der hintere Teil 18 ist über die besagte Schwenkachse A schwenkbeweglich mit dem unteren Teil 5 der Rückeneinheit 3 verbunden. Dadurch kann die gesamte Sitzflächeneinheit 2 als Klappsitz konfiguriert sein und bei Nichtgebrauch nach oben geklappt werden. Zwischen dem vorderen Teil 17 und dem hinteren Teil 18 befindet sich ein Angriffspunkt für eine Gurtabspannung 19, welche den kürzeren, vorderen Teil 17 der Sitzflächeneinheit 2 mit dem oberen Teil 4 der Rückeneinheit 3 verbindet. Die Gurtabspannung 19 erstreckt sich hierzu bis zum oberen Ende des oberen Teils 4 und zwar bis kurz unter die Befestigungsmittel 8, die sich in diesem Ausführungsbeispiel noch unterhalb des oberen Querholms 10 befinden.

Die Gurtabspannung 19 ist gelenkig mit dem vorderen Teil 17 verbunden. Der Drehpunkt D, an welchem die Gurtabspannung mit der Sitzflächeneinheit 2 verbunden ist, befindet sich im größeren horizontalen Abstand von der Rückeneinheit 3 als ein nicht näher dargestellter Schwerpunkt einer auf dem Sicherheitssitz 1 sitzenden Person. Dies ergibt sich auch dadurch, dass der vordere Teil 17 wesentlich kürzer ist als der hintere Teil 18 der Sitzflächeneinheit. Dadurch befindet sich im Bereich des vorderen Teils 17 lediglich der Oberschenkel der Person, während sich der Oberkörper hinter dem Drehpunkt D in der Nähe der Rückeneinheit 3 befindet. Folglich liegt der Gesamtschwerpunkt einer Person auch näher an der Rückeneinheit 3.

Bei einer Beanspruchung der Haltegurtbänder 11 durch in vertikale Richtung wirkende g-Kräfte, wie sie beispielsweise bei einem Hubschrauberabsturz oder bei einer Minenexplosion unterhalb des Kraftfahrzeugs entstehen, werden über die Befestigungsmittel 8 Beschleunigungskräfte in die Rückeneinheit 3 eingeleitet, Der obere Teil 4 der Rückeneinheit 3 wird verlagert. Über die in der Bildebene mittleren Haltegurtbänder 11 wird eine Kraft in den unteren Teil 5 eingeleitet. Zusätzlich sind zweite Haltegurtbänder 28 vorgesehen, die sich im Wesentlichen parallel zu den ersten Haltegurtbändern 11 erstrecken. Die zweiten Haltegurtbänder sind im Bereich des oberen Querholms 10 miteinander verbunden und besitzen einen Verlängerungsabschnitt 29, der sich bei diesem Ausführungsbeispiel mittig im Bereich des oberen Querholms 10 befindet. Er dient als Sollbruchstelle, so dass sich das zweite Haltegurtband 28 im Bereich des Verlängerungsabschnitts 29 bei Überlastung verlängern kann.

Die mittleren Haltegurtbänder 11 besitzen jeweils ebenfalls einen Verlängerungsabschnitt 20, der dafür vorgesehen ist, sich bei einer aus einem Unfall oder einer Explosion resultierenden Kraft zu längen. In den Verlängerungsabschnitten 20, 29 sind bevorzugt mehrere, nicht näher dargestellte, aufeinander liegende Gurtbandlagen oder Schlaufen ausgebildet, die über mindestens eine als Sollbruchstelle konfigurierte Reißnaht oder eine Klebeverbindung miteinander verbunden sind. Bei Überschreitung eines bestimmten Lastniveaus werden diese Gurtbandlagen voneinander getrennt und die Sollbruchstellen zerstört. Die Haltegurtbänder 11, 28 werden dadurch länger, so dass sich der untere Teil 5 unter dem Eigengewicht der Person, die auf der Sitzflächeneinheit 2 sitzt, nach unten absenkt. Dadurch werden erheblich weniger Lasten auf die Person übertragen, als bei einer feststehenden Struktur.

Wenn der gesamte Sicherheitssitz 1 einschließlich der Rückeneinheit 3 angehoben wurde, kommt es zwangsläufig auch zu einem erneuten Absenken des Fahrzeugs einschließlich des darin befestigten Sitzes. Am oberen Umkehrpunkt der Hubbewegung wird der Sicherheitssitz 1 entlastet. Die Person verharrt aufgrund ihrer Massenträgheit einen kurzen Moment im oberen Totpunkt, bevor sich das Kraftfahrzeug bzw. die Rückenstruktur 3 des Sicherheitssitzes 1 wieder nach unten bewegt. In diesem bzw. ab diesem Moment setzt die Aufwickeleinheit 27 ein und wickelt die freigewordene Länge der beiden mittleren Haltegurtbänder 11 auf mit dem Ergebnis, dass der hintere Teil 18 der Sitzflächeneinheit 2 angehoben wird und dadurch gewissermaßen in seine Ausgangsstellung verlagert wird. Die mittleren Haltegurtbänder 11 sind nun dafür bereit, im Falle eines Überschreitens eines bestimmten Lastniveaus wiederum als energieabsorbierendes Element im Bereich ihres Verlängerungsabschnittes 20 eine Sollbruchstelle freizugeben, so dass sich der hintere Teil 18 der Sitzflächeneinheit 2 erneut absenken kann. Dadurch kann die Belastung auf die Person ein weiteres Mal reduziert werden.

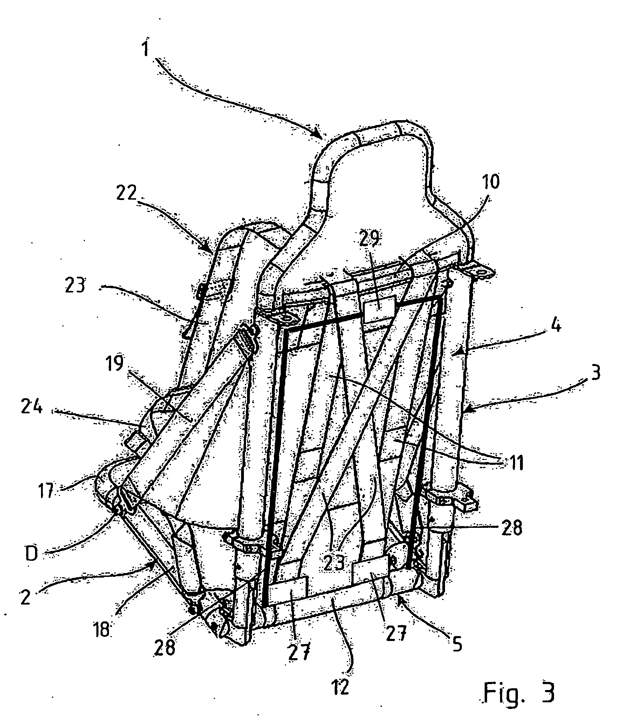

Die Ausführungsform der Figur 3 unterscheidet sich in ihrem prinzipiellen Aufbau nicht von derjenigen der Figuren 1 und 2, so dass die dort eingeführten Bezugszeichen weiter verwendet werden. Hinzugekommen ist eine Sicherheitsgurtanordnung 22 mit Schultergurten 23 und einem Beckengurt 24. Die Schultergurte 23 sind über den oberen Querholm 10 geführt. Sie laufen auf der Rückseite der Rückeneinheit 3 über Kreuz und sind mit ihren unteren Enden mit dem unteren Querholm 12 verbunden. Wenn es nun zu einer Zerstörung der Sollbruchstelle und damit zu einem Absenken des unteren Teils 5 kommt, werden die oberen Enden der Schultergurte 23 aufgrund dieser Abwärtsbewegung des unteren Teils 5 nach hinten gezogen. Der Insasse wird gegen den Sicherheitssitz 1 gepresst und in der Sitzposition fixiert.

Zudem ist der Beckengurt 24 im geringen Abstand von der Schwenkachse A der Sitzflächeneinheit 2 mit der U-förmigen Rahmenstruktur der Sitzflächeneinheit 2 verbunden. Durch das Absenken der Sitzflächeneinheit wird auch der Beckengurt 24 an seinen Anschlagpunkten nach unten gezogen, während sich gleichzeitig der vordere Teil 17 der Sitzflächeneinheit 2 anhebt. Dadurch ist der Insasse auf dem Sitz sicher fixiert. Ein Submarining des Insassen wird vermieden.

Zwischen der Gurtabspannung 19, die sich auf jeder Längsseite des Sicherheitssitzes befindet, ist eine Rückenlehneneinheit 25 angeordnet. Die schalenförmige Rückenlehneneinheit 25 besteht aus einem textilen Gewebe und wird ausschließlich von den Gurtabspannungen 19 gehalten.

Die Ausführungsform der Figur 5 unterscheidet sich von derjenigen der Figur 3 durch eine zusätzliche Fußstütze 26, die gewissermaßen U-förmig konfiguriert ist und mit den Knotenelementen 15, 16 verbunden ist. Auf der den Tauchprofilen 13, 14 gegenüberliegenden Seite beginnt die Fußstütze 26, erstreckt sich bogenartig nach vorne in Richtung zur Sitzflächeneinheit 2 und verläuft dann im parallelen Abstand zur Sitzflächeneinheit 2. Das vordere Ende der Fußstütze 26 ist so angeordnet, dass der Insasse seine Füße bequem auf dem bogenförmig geschlossenen vorderen Teil der Fußstütze 26 aufsetzen kann. Es ist zu erkennen, dass sich die Fußstütze 26 aufgrund der starren Anbindung an den Knotenelementen 15, 16 parallel zur Sitzflächeneinheit 2 verlagert. Die Fußstützeneinheit ist nicht mit dem Boden des Kraftfahrzeugs verbunden und wird gleichzeitig mit der Absenkung des hinteren Teils 18 der Sitzflächeneinheit 2 abgesenkt.

### Bezugszeichen:

- 1 -: Sicherheitssitz
- 2 -: Sitzflächeneinheit
- 3 -: Rückeneinheit
- 4 -: oberer Teil
- 5 -: unterer Teil
- 6 -: Führungsrohr
- 7 -: Führungsrohr
- 8 -: Befestigungsmittel
- 9 -: Kopfstütze
- 10 -: oberer Querholm
- 11 -: Haltegurtband
- 12 -: unterer Querholm
- 13 -: Tauchprofil
- 14 -: Tauchprofil
- 15 -: Knotenelement
- 16 -: Knotenelement
- 17 -: vorderer Teil
- 18 -: hinterer Teil
- 19 -: Gurtabspannung
- 20 -: Verlängerungsabschnitt
- 21 -: Anzeigemittel
- 22 -: Sicherheitsgurtanordnung
- 23 -: Schultergurt
- 24 -: Beckengurt
- 25 -: Rückenlehneneinheit
- 26 -: Fußstütze
- 27 -: Aufwickeleinheit
- 28 -: Haltegurtband
- 29 -: Verlängerungsabschnitt

- A -: Schwenkachse
- D -: Drehpunkt

## Patentansprüche

1. Verfahren zur Reduzierung der Krafteinwirkung auf eine Person, die auf einem Sicherheitssitz (1) eines Kraftfahrzeugs sitzt, mit folgenden Merkmalen:
a) Wenigstens eine Sitzflächeneinheit (2) des Sicherheitssitzes (1) wird zumindest teilweise über wenigstens ein Haltegurtband (11) gehalten;
b) Das wenigstens eine Haltegurtband (11) weist mindestens einen sich unter der Last eines Unfalls oder einer Explosion längenden Verlängerungsabschnitt (20) auf;
**gekennzeichnet durch** folgende Merkmale:
c) Das wenigstens eine Haltegurtband (11) ist zwischen einer Rückeneinheit (3) des Sicherheitssitzes (1) und der Sitzflächeneinheit (2) wirksam;
d) Das wenigstens eine Haltegurtband (11) wird von einer Aufwickeleinheit (27) gehalten, wobei die Aufwickeleinheit (27) eine wirksame Länge des Haltegurtbands (11) verkürzt und eine Vorspannkraft auf das Haltegurtband (11) aufbaut, nachdem das Haltegurtband (11) unter der Last einer aus einem Unfall oder einer Explosion resultierenden Kraft im Bereich seines Verlängerungsabschnitts (20) gelängt worden ist, so dass die noch wirksame Länge des Haltegurtbands (11) wieder bereit steht, um durch eine weitere Krafteinwirkung gelängt zu werden.

2. Verfahren nach Anspruch 1, **dadurch gekennzeichnet, dass** die aus einem Unfall oder einer Explosion resultierende Kraft im wesentlichen senkreckt nach oben wirkt, so dass der gesamte Sicherheitssitz (1) bis zu einem oberen Totpunkt angehoben wird, wobei die Aufwickeleinheit (27) ab dem Erreichen des oberen Totpunktes das Haltegurtband (11) verkürzt, bevor der Sicherheitssitz (1) sich wieder nach unten bewegt.

3. Verfahren nach Anspruch 1 oder 2, **dadurch gekennzeichnet, dass** der wenigstens eine Verlängerungsabschnitt (20) des Haltegurtbands (11) mehrere Sollbruchstellen besitzt, wobei die Sollbruchstellen Reißnähte oder Klebeverbindungen sind, die bei Überlastung reißen und eine Schlaufe des Haltegurtbandes (11) freigeben.

4. Sicherheitssitz für Kraftfahrzeuge mit folgenden Merkmalen:
a) Der Sicherheitssitz (1) umfasst eine Sitzflächeneinheit (2) und eine Rückeneinheit (3);
b) Die Sitzflächeneinheit (2) ist mindestens teilweise über wenigstens ein Haltegurtband (11) gehalten;
c) Das wenigstens eine Haltegurtband (11) weist mindestens einen sich unter der Last eines Unfalls oder einer Explosion längenden Verlängerungsabschnitt (20) auf;
d) Das wenigstens eine Haltegurtband (11) ist von einer Aufwickeleinheit (27) gehalten;
**gekennzeichnet durch** folgende Merkmale:
e) Die Rückeneinheit (3) weist einen oberen Teil (4) und einen unteren Teil (5) auf, wobei der Sicherheitssitz (1) über den oberen Teil (4) mit der Struktur eines Kraftfahrzeugs verbindbar ist und wobei der untere Teil (5) gegenüber dem oberen Teil (4) absenkbar ist und an dem oberen Teil (4) geführt und über wenigstens ein Haltegurtband (11) mit dem oberen Teil (4) verbunden ist;
f) Die Aufwickeleinheit (27) ist dafür vorgesehen, eine wirksame Länge des wenigstens einen Haltegurtbands (11) zu verkürzen und unter einer Vorspannkraft zu halten, wenn sich das Haltegurtband (11) unter der Last einer aus einem Unfall oder einer Explosion resultierenden Kraft längt, so dass ein weiterer Verlängerungsabschnitt (20) innerhalb der wirksamen Länge des Haltegurtbandes (11) bereit steht und **durch** eine weitere Kraft längbar ist.

5. Sicherheitssitz nach Anspruch 4, **dadurch gekennzeichnet, dass** die Sitzflächeneinheit (2) einen vorderen Teil (17) besitzt, der gelenkig mit dem oberen Teil (4) der Rückeneinheit (3) verbunden ist, und einen hinteren Teil (18), der gelenkig mit dem unteren Teil (5) der Rückeneinheit (3) verbunden ist, wobei der hintere Teil (18) der Sitzflächeneinheit (2) dafür vorgesehen ist, sich weiter als der vordere Teil (17) der Sitzflächeneinheit (2) abzusenken, wenn auf das Kraftfahrzeug eine aus einem Unfall oder einer Explosion resultierende Kraft einwirkt.

6. Sicherheitssitz nach Anspruch 4 oder 5, **dadurch gekennzeichnet, dass** das Haltegurtband (11) einen Verlängerungsabschnitt (20) mit wenigstens zwei sich in Längsrichtung überlappenden Schlaufen aufweist, die über mindestens eine Sollbruchstelle miteinander verbunden sind.

7. Sicherheitssitz nach einem der Ansprüche 4 bis 6, **dadurch gekennzeichnet, dass** die Aufwickeleinheit (27) an einem der Sitzflächeneinheit zugewandten, unteren Ende des Haltegurtbandes (11) angeordnet ist.

8. Sicherheitssitz nach einem der Ansprüche 4 bis 7, **dadurch gekennzeichnet, dass** eine Gurtabspannung (19) den vorderen Teil (17) der Sitzflächeneinheit (2) mit dem oberen Teil (4) der Rückeneinheit (3) verbindet, wobei der Drehpunkt (D) an welchem die Gurtabspannung (19) mit der Sitzflächeneinheit (2) verbunden ist, sich in größerem horizontalen Abstand von der Rückeneinheit (3) befindet als der Schwerpunkt einer auf dem Sicherheitssitz (1) sitzenden Person.

9. Sicherheitssitz nach einem der Ansprüche 4 bis 8, **dadurch gekennzeichnet, dass** eine Sicherheitsgurtanordnung (22) mit Schultergurten (23) vorgesehen ist, wobei die an dem unteren Teil (5) der Rückeneinheit (3) befestigten Schultergurte (23) am oberen Teil (4) der Rückeneinheit (3) umgelenkt werden und durch Absenken des unteren Teils (5) der Rückeneinheit (3) spannbar sind.

10. Sicherheitssitz nach einem der Ansprüche 4 bis 9, **dadurch gekennzeichnet, dass** wenigstens ein erstes Haltegurtband (11) mit einer Aufwickeleinheit (27) versehen ist, während wenigstens ein zweites Haltegurtband (28) ohne Aufwickeleinheit (27) befestigt ist.

11. Sicherheitssitz nach einem der Ansprüche 4 bis 10, **dadurch gekennzeichnet, dass** das Haltegurtband (11) Mittel zur Anzeige einer Überlastung aufweist.

12. Sicherheitssitz nach einem der Patentansprüche 4 bis 11, **dadurch gekennzeichnet, dass** die wenigstens eine Sollbruchstelle des Haltegurtbandes (11) ein fallendes Lastniveau besitzt.

## Claims

1. Method for reducing the impact of a force on a person sitting on a safety seat (1) of a motor vehicle, having the following features:
a) at least one seat unit (2) of the safety seat (1) is held at least in part by at least one support strap (11);
b) the at least one support strap (11) has at least one extension portion (20) which lengthens when exposed to a load as a result of an accident or explosion;
**characterised by** the following features:
c) the at least one support strap (11) is effective between a back unit (3) of the safety seat (1) and the seat unit (2);
d) the at least one support strap (11) is held by a winding unit (27), the winding unit (27) shortening an effective length of the support strap (11) and building up a pre-tension force on the support strap (11) after the support strap (11) has been lengthened in the region of its extension portion (20) due to being exposed to a load caused by a force resulting from an accident or explosion, so that the still effective length of the support strap (11) is ready to be lengthened again by another force impact.

2. Method according to claim 1, **characterised in that** the force resulting from an accident or explosion is effective substantially vertically upwards, so that the entire safety seat (1) is lifted up to a top dead centre, the winding unit (27) shortening the support strap (11) once the top dead centre has been reached, before the safety seat (1) is lowered again.

3. Method according to either claim 1 or claim 2, **characterised in that** the at least one extension portion (20) of the support strap (11) has a plurality of predetermined breaking points, said predetermined breaking points being tear seams or adhesive bonds which tear in the event of overload and release a loop of the support strap (11).

4. Safety seat for motor vehicles, having the following features:
a) the safety seat (1) comprises a seat unit (2) and a back unit (3);
b) the seat unit (2) is held at least in part by at least one support strap (11);
c) the at least one support strap (11) has at least one extension portion (20) which lengthens when exposed to a load resulting from an accident or explosion;
d) the at least one support strap (11) is held by a winding unit (27);
**characterised by** the following features:
e) the back unit (3) has an upper part (4) and a lower part (5), the safety seat (1) being able to be connected to the structure of a motor vehicle via the upper part (4), and the lower part (5) being able to be lowered in relation to the upper part (4), guided on the upper part (4) and connected to the upper part (4) via at least one support strap (11);
f) the winding unit (27) is provided to shorten an effective length of the at least one support strap (11) and to hold it under a pre-tension force when the support strap (11) lengthens due to being exposed to the load caused by a force resulting from an accident or explosion, so that an additional extension portion (20) within the effective length of the support strap (11) is available and can be lengthened by an additional force.

5. Safety seat according to claim 4, **characterised in that** the seat unit (2) has a front part (17) which is articulated to the upper part (4) of the back unit (3), and a rear part (18) which is articulated to the lower part (5) of the back unit (3), the rear part (18) of the seat unit (2) being provided to be lowered further than the front part (17) of the seat unit (2) when a force resulting from an accident or explosion acts on the motor vehicle.

6. Safety seat according to either claim 4 or claim 5, **characterised in that** the support strap (11) comprises an extension portion (20) having at least two loops which overlap in the longitudinal direction and are interconnected by at least one predetermined breaking point.

7. Safety seat according to any of claims 4 to 6, **characterised in that** the winding unit (27) is arranged on a lower end, which faces the seat unit, of the support strap (11).

8. Safety seat according to any of claims 4 to 7, **characterised in that** a - bracing strap (19) connects the front part (17) of the seat unit (2) to the upper part (4) of the back unit (3), the centre of rotation (D) at which the bracing strap (19) is connected to the seat unit (2) being at a greater horizontal distance from the back unit (3) than the centre of gravity of a person sitting on the safety seat (1).

9. Safety seat according to any of claims 4 to 8, **characterised in that** a safety belt arrangement (22) having shoulder belts (23) is provided, the shoulder belts (23) attached to the lower part (5) of the back unit (3) being passed around the upper part (4) of the back unit (3) and being able to be tensioned by lowering the lower part (5) of the back unit (3).

10. Safety seat according to any of claims 4 to 9, **characterised in that** at least one first support strap (11) is provided with a winding unit (27), whilst at least one second support strap (28) is attached without a winding unit (27).

11. Safety seat according to any of claims 4 to 10, **characterised in that** the support strap (11) has means for indicating an overload.

12. Safety seat according to any of claims 4 to 11, **characterised in that** the at least one predetermined breaking point of the support strap (11) has a falling load level.

## Revendications

1. Procédé de réduction de l'action d'une force sur une personne assise sur un siège de sécurité (1) d'un véhicule automobile, comportant les caractéristiques suivantes :
a) au moins une surface d'assise (2) du siège de sécurité (1) est maintenue au moins partiellement par au moins une sangle de maintien (11) ;
b) l'au moins une sangle de maintien (11) présente au moins une section d'extension (20) s'allongeant sous l'effet d'un accident ou d'une explosion ; **caractérisé par** les caractéristiques suivantes :
c) l'au moins une sangle de maintien (11) est active entre un élément de dossier (3) du siège de sécurité (1) et la surface d'assise (2) ;
d) l'au moins une sangle de maintien (11) est maintenue par une unité d'enroulement (27), l'unité d'enroulement (27) raccourcissant une longueur active de la sangle de maintien (11) et établissant une force de précontrainte sur la sangle de maintien (11), après que la sangle de maintien (11) s'est allongée sous l'effet d'une force résultant d'un accident ou d'une explosion dans la zone de sa section d'extension (20), de sorte que la longueur encore active de la sangle de maintien (11) est de nouveau prête à être allongée par l'action d'une autre force.

2. Procédé selon la revendication 1, **caractérisé en ce que** la force résultant d'un accident ou d'une explosion agit essentiellement verticalement vers le haut, de sorte que l'ensemble du siège de sécurité (1) est hissé vers un point mort supérieur, l'unité d'enroulement (27) raccourcissant la sangle de maintien (11) dès que le point mort supérieur a été atteint, avant que le siège de sécurité (1) ne recommence à descendre.

3. Procédé selon la revendication 1 ou 2, **caractérisé en ce que** l'au moins une section d'extension (20) de la sangle de maintien (11) possède plusieurs points de rupture, les points de rupture étant des coutures déchirables ou des assemblages collés qui se déchirent en cas de surcharge et libèrent un passant de la sangle de maintien (11).

4. Siège de sécurité pour véhicules automobiles comportant les caractéristiques suivantes :
a) le siège de sécurité (1) comprend une surface d'assise (2) et un élément de dossier (3) ;
b) la surface d'assise (2) est au moins partiellement maintenue par au moins une sangle de maintien (11) ;
c) l'au moins une sangle de maintien (11) présente au moins une section d'extension (20) s'allongeant sous l'effet d'un accident ou d'une explosion ;
d) l'au moins une sangle de maintien (11) est maintenue par une unité d'enroulement (27) ;
**caractérisé par** les caractéristiques suivantes :
e) l'élément de dossier (3) présente une partie supérieure (4) et une partie inférieure (5), le siège de sécurité (1) pouvant être relié à la structure d'un véhicule automobile via la partie supérieure (4) et la partie inférieure (5) étant abaissable par rapport à la partie supérieure (4) et guidée au niveau de la partie supérieure (4) et reliée à la partie supérieure (4) via au moins une sangle de maintien (11) ;
f) l'unité d'enroulement (27) est prévue pour raccourcir une longueur active de l'au moins une sangle de maintien (11) et la maintenir sous une force de précontrainte lorsque la sangle de maintien (11) s'allonge sous l'effet d'une force résultant d'un accident ou d'une explosion, de sorte qu'une section d'extension (20) supplémentaire au sein de la longueur active de la sangle de maintien (11) est disponible et est extensible par l'intermédiaire d'une force supplémentaire.

5. Siège de sécurité selon la revendication 4, **caractérisé en ce que** la surface d'assise (2) possède une partie avant (17) reliée de manière articulée à la partie supérieure (4) de l'élément de dossier (3) et une partie arrière (18) reliée de manière articulée à la partie inférieure (5) de l'élément de dossier (3), la partie arrière (18) de la surface d'assise (2) étant prévue pour s'abaisser plus bas que la partie avant (17) de la surface d'assise (2), lorsqu'une force résultant d'un accident ou d'une explosion s'exerce sur le véhicule automobile.

6. Siège de sécurité selon la revendication 4 ou 5, **caractérisé en ce que** la sangle de maintien (11) présente une section d'extension (20) comportant au moins deux passants se chevauchant dans la direction longitudinale, lesquels sont reliés entre eux via au moins un point de rupture.

7. Siège de sécurité selon l'une des revendications 4 à 6, **caractérisé en ce que** l'unité d'enroulement (27) est disposée au niveau de l'extrémité inférieure, opposée à la surface d'assise, de la sangle de maintien (11).

8. Siège de sécurité selon l'une des revendications 4 à 7, **caractérisé en ce qu'**un ancrage à sangle (19) relie la partie avant (17) de la surface d'assise (2) à la partie supérieure (4) de l'élément de dossier (3), le centre de rotation (D) au niveau duquel l'ancrage à sangle (19) est relié à la surface d'assise (2) se trouvant à une distance horizontale de l'élément de dossier (3) plus grande que le centre de gravité d'une personne assise sur le siège de sécurité (1).

9. Siège de sécurité selon l'une des revendications 4 à 8, **caractérisé en ce qu'**un agencement de ceintures de sécurité (22) comportant des sangles diagonales (23) est prévu, les sangles diagonales (23) fixées au niveau de la partie inférieure (5) de l'élément de dossier (3) étant rabattues au niveau de la partie supérieure (4) de l'élément de dossier (3) et pouvant être tendues en abaissant la partie inférieure (5) de l'élément de dossier (3).

10. Siège de sécurité selon l'une des revendications 4 à 9, **caractérisé en ce qu'**au moins une première sangle de maintien (11) est dotée d'une unité d'enroulement (27), tandis qu'au moins une deuxième sangle de maintien (28) est fixée sans unité d'enroulement (27).

11. Siège de sécurité selon l'une des revendications 4 à 10, **caractérisé en ce que** la sangle de maintien (11) présente des moyens pour indiquer une surcharge.

12. Siège de sécurité selon l'une des revendications 4 à 11, **caractérisé en ce que** l'au moins un point de rupture de la sangle de maintien (11) possède un niveau de charge diminuant.
